# EUROPÄISCHE PATENTSCHRIFT

(11) **EP 3 024 357 B1**
(45) Veröffentlichungstag und Bekanntmachung des Hinweises auf die Patenterteilung: **20.09.2023**
(21) Anmeldenummer: 14741842.0
(22) Anmeldetag: 15.07.2014
(51) Int. Cl.: A47B 96/20, B27D 5/00, B29C 63/00, B32B 15/08, B32B 15/098, B32B 1/04

(54) **BRANDHEMMENDES KANTENMATERIAL FÜR PLATTEN, KORRESPONDIERENDE SANDWICHPLATTE SOWIE BRANDHEMMENDE DECKSCHICHT**
FIRE-RETARDANT EDGE MATERIAL FOR PANELS, CORRESPONDING SANDWICH PANEL, AND FIRE-RETARDANT COVER LAYER
MATÉRIEL DE CHANTS IGNIFUGE POUR DES PANNEAUX, PANNEAU SANDWICH CORRESPONDANT AINSI QUE COUCHE DE REVÊTEMENT IGNIFUGE

(30) Priorität: 23.07.2013 DE 102013214391
(43) Veröffentlichungstag der Anmeldung: 01.06.2016
(73) Patentinhaber: Lufthansa Technik AG, 22335 Hamburg (DE)
(72) Erfinder: REIFFERSCHEID, Moritz, 21483 Basedow (DE)
(74) Vertreter: Müller Verweyen
(86) Internationale Anmeldenummer: PCT/EP2014/065150
(87) Internationale Veröffentlichungsnummer: WO 2015/010960

(56) Entgegenhaltungen:
- WO-A1-2005/070666
- WO-A1-2008/049464

## Beschreibung

Die Erfindung betrifft ein brandhemmendes Kantenmaterial für Platten, wobei das Kantenmaterial aus einer Mehrzahl von miteinander verklebten Schichten aufgebaut ist. Weiterhin betrifft die Erfindung eine Sandwichplatte mit einer aus Deckmaterialien gebildeten ersten Decklage und zweiten Decklage. Die Sandwichplatte weist zwischen den Deckmaterialien der ersten Decklage und der zweiten Decklage ein Kernmaterial und seitliche Kanten zwischen der ersten Decklage und zweiten Decklage auf. Zudem betrifft die Erfindung eine brandhemmende Deckschicht für Platten.

Platten werden als biegesteife, flächige Bauteile zur Realisierung verschiedenster Konstruktionen genutzt. Übliche Platten weisen in der Regel eine konstante Dicke auf und können großflächig industriell gefertigt werden. Die Herstellung und Verwendung von Platten erfolgt häufig rahmenlos, d.h. es sind keine Konstruktionen vorgesehen, welche die Platten seitlich umschließen. Sandwichplatten weisen in der Regel ein Kernmaterial auf, welches über die Decklagen flächig einwirkende Druckbelastungen gut aufnehmen kann, jedoch gegenüber punktuellen Druckbelastungen, wie sie insbesondere durch die unsachgemäße Einwirkung von Personen im Möbelbau oder Innenausbau auftreten können, für Schädigungen anfällig sind. Beispiele für derartige Kernmaterialien sind Honigwabenstrukturen (engl. honeycombs) oder feste Schäume.

Es sind daher insbesondere im Leichtbau bei der Verwendung von Sandwichplatten Maßnahmen notwendig, die das Kernmaterial vor schädigenden Einflüssen schützen, so dass die Kanten einer Platte durch Umleimer, Stützkanten oder Furnierkanten geschützt werden. Als Schutzmöglichkeiten kommen bei Honigwabenstrukturen aushärtende Füllmaterialien in Betracht, mit denen die seitlich offenen Waben ausgefüllt werden können. Weiterhin können auch Kunststoffkanten in Dicken von 3 mm bis 7 mm auf die Kanten aufgeklebt werden.

Aufgrund von Brandschutzanforderungen, insbesondere im Luftfahrtbereich, kommt dem Schutz der offenen Kanten besondere Bedeutung zu. Übliche Umleimer, wie sie im allgemeinen Möbelbau verwendet werden, erreichen keinen ausreichenden Brandschutz, d.h. eine auf den Umleimer einwirkende Flamme erfährt einen nur unzureichenden Widerstand, so dass das dahinter liegende Kernmaterial in kurzer Zeit von der Flamme angegriffen wird. Herkömmliche Umleimer mit meist dekorativer Metallschicht ermöglichen die Erfüllung höherer Brandschutzanforderungen, diese sind aber bei Verwendung von Sandwichplatten nur für verdeckte Möbelkanten geeignet, da die Druckfestigkeit gegenüber Punktlasten nicht ausreichend ist. Zudem sind auch kleinste Kratzer auf der metallischen Oberfläche schnell sichtbar. Mit deutlich dickeren Metallschichten könnte die Widerstandsfähigkeit gegen Durchdringung bei einer punktuellen Belastung zwar erhöht werden, jedoch steigt der Aufwand bei der Verarbeitung stark an. Zudem würde sich gleichzeitig das Gewicht erheblich erhöhen, was insbesondere im Luftfahrtbereich unerwünscht und mit vielen Nachteilen verbunden ist.

Spezielle für die Luftfahrt zugelassene Kunststoffkanten haben zwar die gewünschte Brandfestigkeit bei entsprechenden Schichtdicken, können jedoch unter anderem aufgrund der notwendigen Schichtdicke nicht als Rollenware produziert werden. Daher müssen die Kunststoffkanten individuell für jede Kante einer Platte zugeschnitten und an den Ecken an die anderen Kunststoffkanten angepasst werden. Weiterhin kann sich die Kunststoffkante am Rand der Oberfläche der Platte unter einer Lackierung oder einer Dekorschicht abzeichnen, was für einen hochwertigen optischen Eindruck der Platte störend sein kann. Eine sogenannte Abzeichnung kann sich auch erst nach längerer Zeit durch übliche Belastungen ergeben, so dass unerwünschte Abzeichnungen bei der Herstellung nicht erkannt werden können.

Weiterhin kann bei Platten mit besonders hohen Brandschutzanforderungen eine Erhöhung der Brandfestigkeit der üblichen Deckmaterialien erforderlich sein.

WO 2005/070666 A1 offenbart ein Kantenschutzband mit einer nach außen weisenden Polyurethan-Folie, einer Klebebeschichtung, einer Aluminiumfolie und einer weiteren Klebebeschichtung, die vor Aufbringung des Kantenschutzbandes von einem Silikonpapier geschützt ist.

WO 2008/049464 A1 offenbart ein Kantenschutzband mit einem Gleitband aus ultrahochmolekularem Polyethylen, einer Kleberschicht, einer Aluminium-Folie, einem Kaschierkleber, einer PE- oder PP-Folie, einem Kaschierkleber, einer weiteren Aluminium-Folie und einer weiteren Kleberschicht, die vor Aufbringung des Kantenschutzbandes von einem Silikonpapier geschützt ist.

Die Aufgabe der Erfindung ist es, ein Kantenmaterial, eine Sandwichplatte und eine Deckschicht anzugeben, welches die oben genannten Nachteile überkommt.

Die Aufgabe der Erfindung wird ausgehend vom Oberbegriff des Anspruchs 1 in Verbindung mit dessen kennzeichnenden Merkmalen gelöst. Es wird ein Kantenmaterial für Platten vorgeschlagen, wobei das Kantenmaterial aus einer Mehrzahl von miteinander verklebten Schichten aufgebaut ist. Erfindungsgemäß weist das Kantenmaterial eine erste Schicht auf, welche nichtmetallisch ist, zudem weist das Kantenmaterial eine Kernschicht auf, welche aus wenigstens einer metallischen Schicht gebildet ist. Weiterhin weist das Kantenmaterial eine zweite Schicht auf, welche nichtmetallisch ist. Die Kernschicht ist zwischen der ersten Schicht und der zweiten Schicht angeordnet.

Ein entsprechendes brandhemmendes oder auch schwer entflammbares Kantenmaterial kann ein darunter liegendes Material bei einem Brand bzw. Feuer ausreichend lange schützen, wodurch die luftfahrtrechtlichen Brandschutzanforderungen für den Innenausbau eines Flugzeugs sowie Brandschutzanforderungen für Yachten oder Landfahrzeuge erfüllt werden können. Gleichzeitig kann das Kantenmaterial von einer Rolle abgezogen und in einfacher und kostengünstiger Weise auf die Kanten von Platten, insbesondere auf die Kanten von Sandwichplatten, appliziert werden. Weiterhin erreicht das Kantenmaterial eine ausreichend hohe Widerstandskraft gegen Punktlasten oder Kerben, so dass es an Sichtkanten und beim Innenausbau von Flugzeugen oder Schiffen an offen zugänglichen Bereichen angewendet werden kann. Weiterhin kann das Kantenmaterial sehr dünn ausgeführt werden, wobei nur ein Anteil auf die metallische Schicht entfällt. Die nichtmetallischen Schichten können hierbei eine deutlich geringere Dichte als die metallische Schicht aufweisen, so dass sich insgesamt durch die geringe Materialstärke und die im Durchschnitt geringe Dichte ein leichtes Kantenmaterial mit einer ausreichenden mechanischen Festigkeit ergibt. Ein geringes Gewicht ist beim Ausbau von Innenräumen von Fahrzeugen, Schiffen und insbesondere Flugzeugen vorteilhaft, um einen geringen Treibstoffverbrauch oder ein gutes dynamisches Verhalten zu erreichen. Das Kantenmaterial kann vorteilhaft insbesondere als schwer entflammbares Kantenmaterial im Bereich des Innenausbaus von Flugzeugen, Yachten oder Caravans eingesetzt werden.

Der Aufbau des Kantenmaterials widerspricht der üblichen Herangehensweise beim Aufbau von Sandwichschichten, wonach die zugfesteren und auch dichteren Materialien beidseitig eines schwächeren und dafür weniger dichten Materials angeordnet werden. Beim vorgeschlagenen Kantenmaterial befindet sich die zugfestere, metallische Schicht in der Mitte und wird von den weniger zugfesten Materialien umschlossen. Die erste nichtmetallische Schicht und die zweite nichtmetallische Schicht ermöglichen eine einfache Verklebung des Kantenmaterials mit einer Platte sowie auch eine Biegung um enge Biegeradien. Die Verklebung des Kantenmaterials kann in vorteilhaften Ausführungsformen mit der ersten nichtmetallischen Schicht oder mit der zweiten nichtmetallischen Schicht erfolgen. Die Widerstandsfähigkeit gegenüber punktuellen Lasten kann insbesondere durch die Kombination der nichtmetallischen Schichten und der metallischen Kernschicht erreicht werden. Die Kernschicht weist dabei einen höheren Brandwiderstand als die erste und die zweite Schicht auf, so dass diese insbesondere zu dem brandhemmenden Verhalten des Kantenmaterials beiträgt, so dass das Kantenmaterial insgesamt eine Flamme daran hindern kann ein Plattenmaterial bei einem vertikalen Brandtest direkt zu beanspruchen oder zumindest die Brandbelastung des Plattenmaterials im Bereich der Kante erheblich verringert.

Erfindungsgemäß ist die Kernschicht aus zwei miteinander verklebten metallischen Schichten gebildet. Die Verwendung von zwei metallischen Schichten verbessert die thermische Isolierung und Ableitung der Wärme bei einem Brand oder starker Hitzeeinwirkung gegenüber einer einfachen Ausführung der metallischen Schicht. Dadurch wird der eigentliche Wärmeeintrag an der Brandstelle verringert. Dies führt zu einer geringeren Brandbelastung des dahinter liegenden Materials, beispielsweise das Kernmaterial einer Sandwichplatte, und somit zum Schutz desselben. Dies wird zum einen durch den resultierenden thermischen Übergang zwischen beiden metallischen Schichten erreicht. Zum anderen kann sich die Klebverbindung zwischen den metallischen Schichten bei entsprechendem Wärmeeintrag ausdehnen oder partiell delaminieren, so dass der Wärmeübergang in eine weiter unten liegende metallische Schicht erheblich verschlechtert wird. Hierdurch kann die thermisch isolierende Wirkung des Kantenmaterials verstärkt werden, wodurch die Widerstandsfähigkeit gegen ein Durchbrennen gesteigert werden kann.

In bevorzugten Ausführungsformen weist das Kantenmaterial eine Materialstärke zwischen 0,3 mm und 3,0 mm, weiter vorzugsweise zwischen 0,3 mm und 1,2 mm, auf. Ein entsprechendes Kantenmaterial ermöglicht einen ausreichenden Flammschutz, eine gute Verarbeitbarkeit von einer Endlosrolle sowie die Applizierung auf abgerundete Kanten mit entsprechend engen Biegeradien. Zudem ist die Druckfestigkeit gegenüber Punktlasten ausreichend hoch, so dass das Kantenmaterial in Bereichen mit häufigem Personenkontakt eingesetzt werden kann. Durch Personen können beispielsweise Schlüssel oder Besteck in unsachgemäßer Weise auf die Kanten gedrückt werden, so dass hohe punktuelle Belastungen auftreten können. Die Dicke ist hierbei vorzugsweise so gering, dass die Deckschicht nicht über das Kantenmaterial hinaus verlängert werden muss, wodurch mögliche Abzeichnungen des Kantenmaterials unterhalb der obersten Schicht einer Platte oder einer Lackierung gar nicht erst entstehen können. Weiterhin kann die Materialstärke in möglichen Ausführungsformen auch vergleichsweise groß gewählt werden, da die metallische Schicht die Ausdehnung des Kantenmaterials begrenzt, so dass eine Abzeichnung des Kantenmaterials unwahrscheinlicher wird.

Erfindungsgemäß weisen die metallischen Schichten eine Dicke zwischen 0,2 mm und 0,35 mm auf. Eine entsprechende Dicke ist vorteilhaft, um eine ausreichende thermisch isolierende Wirkung und gegebenenfalls auch eine gute Ableitung von Wärme zu erreichen, wobei gleichzeitig das Gewicht möglichst gering gehalten werden kann. Weiterhin können metallische Schichten mit der entsprechenden Dicke bei den üblichen Biegeradien im Innenausbau bzw. Möbelbau vorteilhaft gebogen werden.

Vorzugsweise bestehen die metallischen Schichten aus Aluminium oder einer Aluminiumbasislegierung.

Unter einer Aluminiumbasislegierung wird eine Legierung verstanden, welche einen Masseanteil von wenigstens 50% Aluminium in der Legierungszusammensetzung aufweist. Aluminium zeichnet sich durch ein entsprechend gutes Korrosionsverhalten und eine vergleichsweise geringe Dichte aus. Weiterhin verfügt Aluminium über eine ausreichende Wärmeleitfähigkeit und hohe Reflektionseigenschaften, wodurch die Entflammbarkeit des Kantenmaterials oder der darunter zu schützenden Materialien verringert werden kann.

Erfindungsgemäß bestehen die erste Schicht und die zweite Schicht aus einem Verbundwerkstoff, wobei der Verbundwerkstoff einen Masseanteil von Phenolharz von wenigstens 20% aufweist. Der Verbundwerkstoff kann beispielsweise ein Schichtpressstoff aus in Phenolharz getränktem Papier, Holz oder Gewebe sein. Die Verwendung von Phenolharz ermöglicht eine gute Brandbeständigkeit. Es können auch weitere Materialien, wie z.B. Glasfasern oder Kohlenstofffasern, mit Phenolharz als Matrixmaterial kombiniert werden.

In vorteilhaften Ausführungsformen ist auf der ersten Schicht und/oder der zweiten Schicht eine metallische oder nichtmetallische Dekorschicht angeordnet. Eine Dekorschicht auf der Oberfläche der ersten und/oder zweiten Schicht ermöglicht eine individuelle Einstellung der optischen und haptischen Oberflächeneigenschaften. In möglichen Ausführungsformen kann auch eine Lackierung oder eine andere Beschichtung der Oberfläche erfolgen.

Weiterhin wird die Aufgabe der Erfindung ausgehend vom Oberbegriff des Anspruchs 8 in Verbindung mit dessen kennzeichnenden Merkmalen gelöst. Es wird eine Sandwichplatte mit einer aus Deckmaterialien gebildeten ersten und zweiten Decklage vorgeschlagen, wobei die Sandwichplatte zwischen der ersten Decklage und der zweiten Decklage ein Kernmaterial aufweist. Die Sandwichplatte weist seitliche Kanten zwischen der ersten Decklage und der zweiten Decklage auf, wobei erfindungsgemäß zumindest das Kernmaterial seitlich von einem Kantenmaterial der oben beschriebenen Art abgedeckt ist.

In vorteilhaften Ausführungsformen ist mindestens eine Decklage aus einem Deckmaterial gebildet, wobei das Deckmaterial ein Kantenmaterial der beschriebenen Art ist.

Darüber hinaus wird die Aufgabe der Erfindung ausgehend vom Oberbegriff des Anspruchs 10 in Verbindung mit dessen kennzeichnenden Merkmalen gelöst. Es wird eine Deckschicht für Platten vorgeschlagen, wobei die Deckschicht wenigstens teilweise aus einem Kantenmaterial der zuvor beschriebenen Art gebildet ist.

Eine entsprechende brandhemmende Deckschicht kann einer Platte, insbesondere einer Sandwichplatte, eine deutlich höhere Widerstandsfähigkeit gegen Entflammen und/oder Durchbrand verleihen. Die Sandwichplatte kann somit ohne strukturelle Veränderung einen höheren Brandschutz erreichen.

Die Erfindung wird im Folgenden anhand bevorzugter Ausführungsformen unter Bezugnahme auf die beigefügten Figuren erläutert. Dabei zeigt:
Fig. 1 einen Querschnitt eines nicht erfindungsgemäßen, mehrschichtigen Kantenmaterials mit einer metallischen Schicht als Kernmaterial;
Fig. 2 einen Querschnitt eines mehrschichtigen Kantenmaterials mit zwei metallischen Schichten als Kernmaterial;
Fig. 3 einen Querschnitt einer Sandwichplatte mit einer durch ein Kantenmaterial geschlossenen Kante;
Fig. 4 einen Querschnitt einer Sandwichplatte mit einer durch ein Kantenmaterial geschlossenen Kante und einer zusätzlichen Deckschicht; und
Fig. 5 einen Querschnitt einer Sandwichplatte mit einem Kantenmaterial als erste und zweite Decklage.

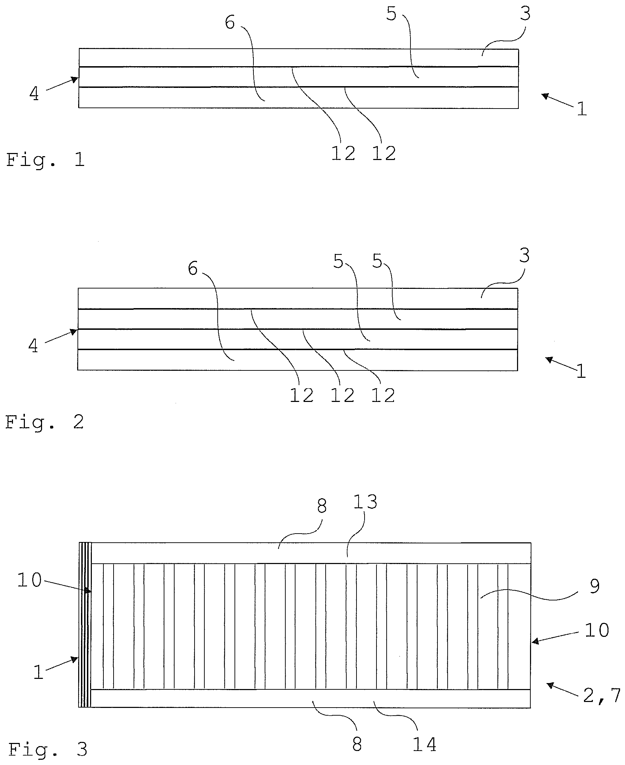

In Fig. 1 ist ein nicht erfindungsgemäßes Ausführungsbeispiel eines mehrschichtigen Kantenmaterials 1 mit einer metallischen Schicht 5 als Kernmaterial 4 in einem Querschnitt dargestellt. Die erste Schicht 3 sowie die zweite Schicht 6 sind hierbei aus mit Phenolharz getränktem Papier gefertigt. Es können jedoch auch andere nichtmetallische Schichten, wie beispielsweise reine Kunststoffschichten oder auch Verbundwerkstoffe, genutzt werden, wobei sich mit Verbundwerkstoffen auf Phenolharzbasis besonders gute Ergebnisse erzielen lassen. Zwischen der ersten Schicht 3 und der metallischen Schicht 5 sowie zwischen der metallischen Schicht 5 und der zweiten Schicht 6 besteht jeweils eine Klebverbindung 12, die die einzelnen Schichten zusammenhält.

Die erste Schicht 3 zeigt in diesem Ausführungsbeispiel eine deutlich höhere Toleranz gegenüber Kratzern als eine einfache metallische Oberfläche, welche z.B. durch eine höhere Elastizität der Oberfläche der ersten Schicht 3 als eine metallische Oberfläche erreicht werden kann. Die höhere Toleranz bezieht sich insbesondere auf die Sichtbarkeit von Kratzern oder anderen Oberflächenunregelmäßigkeiten, d.h. auf bleibenden nachträglich eingebrachten Unregelmäßigkeiten der Oberfläche. Auf diese Weise kann ein hochwertiger Eindruck länger aufrecht erhalten werden. Zudem kann die Verarbeitung mit weniger Umsicht erfolgen, was eine schnellere manuelle Verarbeitung ermöglicht. Das Kantenmaterial 1 kann mit dem entsprechenden mehrschichtigen Aufbau von einer Person mit einem metallischen Gegenstand nicht ohne übermäßigen Kraftaufwand durchgedrückt werden. Insgesamt kann mit dem Kantenmaterial eine bessere Haltbarkeit von Sandwichplatten erreicht werden.

In Fig. 2 ist ein erfindungsgemäßes Ausführungsbeispiel eines Kantenmaterials 1 dargestellt, welches zwei metallische Schichten 5 als Kernschicht 4 aufweist. Die beiden metallischen Schichten 5 weisen untereinander eine Klebverbindung 12 auf. Die Verklebung von zwei metallischen Schichten 5, welche vorzugsweise aus Aluminium bestehen, verbessert den Brandschutz und die Sicherheit gegen Punktierung des Kantenmaterials 1 gegenüber der Verwendung nur einer einzelnen metallischen Schicht 5. Bei der Verwendung von zwei metallischen Schichten 5 können diese auch jeweils mit einer geringeren, vorzugsweise halben, Dicke ausgeführt werden, als dies bei der Verwendung einer einzigen metallischen Schicht 5, welche allein als Kernschicht 4 ausgebildet ist, erforderlich wäre. In den Ausführungsbeispielen der Fig. 1 und Fig. 2 weist das Kantenmaterial 1 jeweils vorzugsweise einen symmetrischen Aufbau auf. Es kann daher möglich sein, das Kantenmaterial 1 mit der ersten Schicht 3 oder mit der zweiten Schicht 6 auf einer Kante 10 einer Platte 2 oder auch einer Sandwichplatte 7 zu verkleben. In möglichen vorteilhaften Ausführungsbeispielen kann die Kernschicht 4 auch aus drei oder mehr metallischen Schichten 5 gebildet sein.

In Fig. 3 ist eine Platte 2, in diesem Ausführungsbeispiel eine Sandwichplatte 7 mit einer ersten Decklage 13 und einer zweiten Decklage 14 aus einem Deckmaterial 8 beidseitig eines Kernmaterials 9, dargestellt. Das Kernmaterial 9 ist in diesem Ausführungsbeispiel eine Honigwabenstruktur. Seitlich und der dem Betrachter zugewandten Seite ergeben sich zwischen den Deckmaterialien 8 die Kanten 10 der Sandwichplatte 7. Im Bereich der Kanten 10 ist das Kernmaterial 9 der Sandwichplatte 7 zunächst offen, so dass es Flammen, Hitze und oberflächigen mechanischen Einwirkungen ungeschützt ausgesetzt ist. Aufgrund der angeschnittenen Wabenstruktur des Kernmaterials 9 ist die freigesetzte Oberfläche besonders groß, wodurch sich die hohe Brandbelastung im Brandfall ergibt. In der Fig. 3 auf der linken Kante 10 der Sandwichplatte 7 ist ein Kantenmaterial 1 appliziert oder auch aufgeklebt, welches den seitlichen Abschluss der Sandwichplatte 7 bildet. Das Kernmaterial 9 kann somit bei einem Brand in ausreichendem Maße geschützt werden. Das Kantenmaterial 1 weist in diesem Ausführungsbeispiel den Aufbau mit zwei metallischen Schichten 5 entsprechend der Fig. 2 auf. Weiterhin kann das durch das vorgeschlagene Kantenmaterial 1 zusätzliche Gewicht der Sandwichplatte 7 gering gehalten werden, da insbesondere die verwendete Masse Metall, in diesem Ausführungsbeispiel Aluminium, gering gehalten werden kann. Gleichzeitig ergibt sich eine gute Widerstandsfähigkeit gegenüber Punktlasten auf die Kanten 10 sowie gegen ein Eindringen von spitzen Gegenständen in das Kernmaterial 9 über die Kanten 10. Die nichtmetallische Oberfläche der ersten Schicht 3 und der zweiten Schicht 6 des Kantenmaterials 1 ermöglicht eine einfache weitere Bearbeitung, beispielsweise eine Lackierung, und zeigt eine höhere Toleranz gegenüber der Sichtbarkeit von Kratzern auf der Oberfläche als eine metallische Oberfläche, so dass dauerhaft ein höherwertiger optischer Eindruck erreicht werden kann.

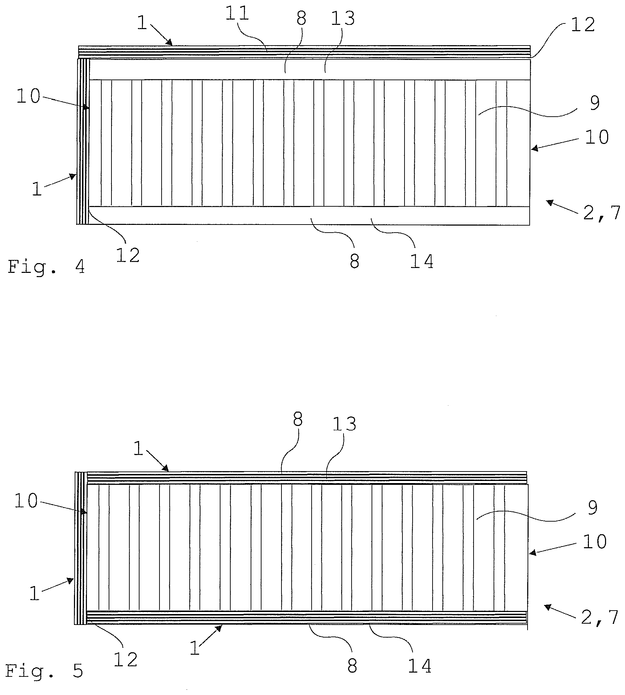

In Fig. 4 ist die Sandwichplatte 7 aus dem Ausführungsbeispiel der Fig. 3 dargestellt. Auf der Decklage 13 der Sandwichplatte 7 ist eine Deckschicht 11 aus dem beschriebenen Kantenmaterial 1 aufgeklebt. Auf diese Weise kann die Widerstandsfähigkeit der Sandwichplatte 7 gegen Feuer, Entflammen und/oder Durchbrand, in diesem Ausführungsbeispiel insbesondere von oben, erhöht werden. Auf diese Weise können Sandwichplatte 7 oder allgemein Platten 2 lokal oder auch großflächig zusätzlich einen verbesserten Brandschutz erhalten. Die Applikation einer Deckschicht 11 auf einer Sandwichplatte 7 oder Platte 2 kann ein- oder zweiseitig erfolgen.

Die Deckschicht 11 aus dem Kantenmaterial 1 ist gegenüber den Decklagen 13 aus einem Deckmaterial 8 aus den üblicherweise verwendeten Faserverbundwerkstoffen, z.B. glasfaserverstärkter Kunststoff, für Hochglanzlackierungen von Vorteil, da das Kantenmaterial 1 eine deutlich geringere Welligkeit als die üblichen Deckmaterialien 8 aufweist. Zudem weist die Festigkeit einer Deckschicht 11 aus dem Kantenmaterial 1 eine Toleranz gegenüber einem Anschleifen der Oberfläche auf. Übliche Deckmaterialien 8, welche für eine Hochglanzlackierung geeignet sind, erreichen nur unzureichende Festigkeitswerte, sind brennbar oder lassen sich im Möbelbau nur mit erheblichem Mehraufwand bearbeiten.

In Fig. 5 ist ein weiteres vorteilhaftes Ausführungsbeispiel einer Sandwichplatte 7 dargestellt. In diesem Ausführungsbeispiel ist das Deckmaterial 8 der ersten Decklage 13 und zweiten Decklage 14 aus dem Kantenmaterial 1 gebildet, so dass das beschriebene Kantenmaterial 1 an die Stelle der üblichen Deckmaterialien 8 einer Sandwichplatte 7 tritt. Dies ermöglicht eine leichte Sandwichplatte 7 mit guten brandhemmenden Eigenschaften, wobei auf eine zusätzliche Deckschicht 11 verzichtet werden kann, eine entsprechende zusätzliche Applikation jedoch möglich ist.

## Patentansprüche

1. Kantenmaterial (1) für Platten (2), wobei das Kantenmaterial (1) aus einer Mehrzahl von miteinander verklebten Schichten aufgebaut ist, wobei
- das Kantenmaterial (1) eine erste Schicht (3) aufweist, welche nichtmetallisch ist,
- das Kantenmaterial (1) eine Kernschicht (4) aufweist, welche aus wenigstens einer metallischen Schicht (5) gebildet ist, und
- das Kantenmaterial (1) eine zweite Schicht (6) aufweist, welche nichtmetallisch ist, wobei die Kernschicht (4) zwischen der ersten Schicht (3) und der zweiten Schicht (6) angeordnet ist, und die Kernschicht (4) aus zwei miteinander verklebten metallischen Schichten (5) gebildet ist, welche untereinander eine Klebeverbindung (12) aufweisen, wobei die erste Schicht (3) und die zweite Schicht (6) aus einem Verbundwerkstoff bestehen, **dadurch gekennzeichnet, dass** der Verbundwerkstoff einen Masseanteil von Phenolharz von wenigstens 20% aufweist, und die metallischen Schichten (5) eine Dicke zwischen 0,2 mm und 0,35 mm aufweisen.

2. Kantenmaterial (1) nach Anspruch 1, **dadurch gekennzeichnet, dass** das Kantenmaterial (1) eine Materialstärke zwischen 0,3 mm und 3,0 mm aufweist.

3. Kantenmaterial (1) nach einem der vorangehenden Ansprüche, **dadurch gekennzeichnet, dass** die metallischen Schichten (5) aus Aluminium oder einer Aluminiumbasislegierung bestehen.

4. Kantenmaterial (1) nach einem der vorangehenden Ansprüche, **dadurch gekennzeichnet, dass** auf der ersten Schicht (3) und/oder der zweiten Schicht (6) eine metallische oder nichtmetallische Dekorschicht angeordnet ist.

5. Sandwichplatte (7) mit einer aus Deckmaterialien (8) gebildeten ersten Decklage (13) und zweiten Decklage (14), wobei die Sandwichplatte (7) zwischen den Deckmaterialien (8) der ersten Decklage (13) und der zweiten Decklage (14) ein Kernmaterial (9) aufweist, wobei die Sandwichplatte (7) seitliche Kanten (10) zwischen der ersten Decklage (13) und der zweiten Decklage (14) aufweist, **dadurch gekennzeichnet, dass** zumindest das Kernmaterial (9) seitlich von einem Kantenmaterial (1) nach einem der vorangehenden Ansprüche abgedeckt ist.

6. Sandwichplatte (7) nach Anspruch 5, **dadurch gekennzeichnet, dass** mindestens eine Decklage (14) aus einem Deckmaterial (8) gebildet ist, wobei das Deckmaterial (8) ein Kantenmaterial (1) nach einem der Ansprüche 1 bis 5 ist.

7. Deckschicht (11) für Platten (2), **dadurch gekennzeichnet, dass** die Deckschicht (11) aus einem Kantenmaterial (1) nach einem der Ansprüche 1 bis 4 gebildet ist.

## Claims

1. Edge material (1) for panels (2), the edge material (1) being constructed from a plurality of bonded layers, wherein
- the edge material (1) comprises a first layer (3), which is non-metallic,
- the edge material (1) comprises a core layer (4), which is made of at least one metal layer (5), and
- the edge material (1) comprises a second layer (6), which is non-metallic, the core layer (4) being arranged between the first layer (3) and the second layer (6), and the core layer (4) is made of two bonded metal layers (5), which have a bonded connection 12 therebetween, wherein the first layer (3) and the second layer (6) consist of a composite material, **characterized in that** the composite material having a percentage by mass of phenolic resin of at least 20 %, and the metal layers (5) have a thickness of between 0.2 mm and 0.35 mm.

2. Edge material (1) according to claim 1, **characterised in that** the edge material (1) has a material thickness of between 0.3 mm and 3.0 mm.

3. Edge material (1) according to any of the preceding claims, **characterised in that** the metal layers (5) consist of aluminium or an aluminium base alloy.

4. Edge material (1) according to any of the preceding claims, **characterised in that** a metal or non-metal decorative layer is arranged on the first layer (3) and/or the second layer (6).

5. Sandwich panel (7) comprising a first cover ply (13) and a second cover ply (14) that are made of cover materials (8), the sandwich panel (7) comprising a core material (9) between the cover materials (8) of the first cover ply (13) and the second cover ply (14), the sandwich panel (7) comprising side edges (10) between the first cover ply (13) and the second cover ply (14), **characterised in that** at least the core material (9) is covered at the sides by an edge material (1) according to any of the preceding claims.

6. Sandwich panel (7) according to claim 5, **characterised in that** at least one cover ply (14) is made of a cover material (8), the cover material (8) being an edge material (1) according to any of claims 1 to 5.

7. Cover layer (11) for panels (2), **characterised in that** the cover layer (11) is made of an edge material (1) according to any of claims 1 to 4.

## Revendications

1. Matériau de chants (1) pour des panneaux (2), dans lequel le matériau de chants (1) est réalisé à partir d'une pluralité de couches collées ensemble, dans lequel
- le matériau de chants (1) comporte une première couche (3) non métallique,
- le matériau de chants (1) comporte une couche centrale (4) formée à partir d'au moins une couche métallique (5), et
- le matériau de chants (1) comporte une seconde couche (6) non métallique, dans lequel la couche centrale (4) est disposée entre la première couche (3) et la seconde couche (6), et la couche centrale (4) est formée à partir de deux couches métalliques (5) collées ensemble, qui ont une liaison adhésive (12) entre elles, dans lequel la première couche (3) et la seconde couche (6) sont constituées d'un matériau composite, **caractérisé en ce que** le matériau composite présente une fraction massique de résine phénolique d'au moins 20 %, et les couches métalliques (5) présentent une épaisseur comprise entre 0,2 mm et 0,35 mm.

2. Matériau de chants (1) selon la revendication 1, **caractérisé en ce que** le matériau de chants (1) présente une épaisseur de matériau comprise entre 0,3 mm et 3,0 mm.

3. Matériau de chants (1) selon l'une des revendications précédentes, **caractérisé en ce que** les couches métalliques (5) sont constituées d'aluminium ou d'un alliage à base d'aluminium.

4. Matériau de chants (1) selon l'une des revendications précédentes, **caractérisé en ce qu'**une couche décorative métallique ou non métallique est disposée sur la première couche (3) et/ou la seconde couche (6).

5. Panneau sandwich (7) comportant un premier pli de recouvrement (13) et un second pli de recouvrement (14) formés à partir de matériaux de recouvrement (8), dans lequel le panneau sandwich (7) comporte un matériau central (9) entre les matériaux de recouvrement (8) du premier pli de recouvrement (13) et du second pli de recouvrement (14), dans lequel le panneau sandwich (7) comporte des chants latéraux (10) entre le premier pli de recouvrement (13) et le second pli de recouvrement (14), **caractérisé en ce qu'**au moins le matériau central (9) est latéralement recouvert d'un matériau de chants (1) selon l'une des revendications précédentes.

6. Panneau sandwich (7) selon la revendication 5, **caractérisé en ce qu'**au moins un pli de recouvrement (14) est formé à partir d'un matériau de recouvrement (8), dans lequel le matériau de recouvrement (8) est un matériau de chants (1) selon l'une des revendications 1 à 5.

7. Couche de recouvrement (11) pour des panneaux (2), **caractérisée en ce que** la couche de recouvrement (11) est formé à partir d'un matériau de chants (1) selon l'une des revendications 1 à 4.
